# EUROPÄISCHE PATENTSCHRIFT

(11) **EP 2 918 155 B1**
(45) Veröffentlichungstag und Bekanntmachung des Hinweises auf die Patenterteilung: **29.05.2019**
(21) Anmeldenummer: 15401007.8
(22) Anmeldetag: 17.02.2015
(51) Int. Cl.: A01B 3/24, A01B 3/36, A01B 69/00

(54) **Verfahren und Steuerungseinheit zur Einstellung einer Arbeitsbreite eines Pfluges**
Method and control unit for adjusting the operating width of a plough
Procédé et unité de commande destinés au réglage d'une largeur de travail d'une charrue

(30) Priorität: 18.02.2014 DE 102014102030
(43) Veröffentlichungstag der Anmeldung: 16.09.2015
(73) Patentinhaber: Amazonen-Werke H. Dreyer GmbH & Co. KG, 49205 Hasbergen (DE)
(72) Erfinder: Fröschle, Heike, 49124 Georgsmarienhütte (DE)

(56) Entgegenhaltungen:
- EP-A1- 1 964 458
- EP-A2- 1 915 894
- EP-B1- 2 446 725
- DE-A1-102004 027 242

## Beschreibung

Die Erfindung betrifft ein Verfahren zur Einstellung einer Arbeitsbreite eines Pflugs mit den Merkmalen des Oberbegriffs von Anspruch 1 und eine Steuerungseinheit für einen Pflug mit den Merkmalen des Oberbegriffs von Anspruch 15.

Beispielsweise ist aus der DE 10 2004 027 242 A1 oder aus der EP 1915894 A2 ein Routenplanungssystem für landwirtschaftliche Arbeitsmaschinen bekannt, mit dem auf Basis einer äußeren Geometrie eines Feldes eine Fahrtroute erstellt wird und diese dynamisch bei der Bearbeitung auf Basis von GPS-Signalen angepasst wird. Die Fahrtroute wird mit Berechnungsalgorithmen auf Basis von Optimierungskriterien, arbeits- und feldspezifischen Daten generiert und dem Benutzer auf einer Anzeigeeinheit angezeigt.

Weiterhin ist aus der EP 2 446 725 B1 ein Verfahren und ein System zur Fahrtroutenplanung eines landwirtschaftlichen Fahrzeugs bekannt, mit dem ein Feld mit komplexer äußerer Randung in Abschnitte unterteilt werden kann, die dann jeweils mit konstanter Arbeitsbreite in parallelen Fahrspuren abgefahren werden.

Nachteilig bei derartigen Verfahren ist, dass zur Bestimmung der Fahrtroute rechenaufwändige Algorithmen notwendig sind, die beim Einsatz mit einem Pflug zu einem häufigen Aus- und Einsetzen des Pflugs führen können.

Aufgabe der vorliegenden Erfindung ist es daher, ein Verfahren zur Einstellung der Arbeitsbreite eines Pflugs bereitzustellen, das eine effizientere Feldbearbeitung erlaubt.

Diese Aufgabe wird bei einem Verfahren zur Einstellung der Arbeitsbreite eines Pflugs mit den Merkmalen des Oberbegriffs von Anspruch 1 mit den Merkmalen des kennzeichnenden Teils gelöst, gemäß dem das Feld in wenigstens einen Abschnitt mit zwei geraden Abschnittsgrenzen unterteilt wird, dass ein Zentralpunkt als Schnittpunkt der Abschnittsgrenzen oder deren gedachten Verlängerungen ermittelt wird, dass eine Distanz zwischen der Pflugposition und einer der Abschnittsgrenzen entlang eines Kreisbogens um den Zentralpunkt P14-012.doc / 62976 Byte / 17.02.14 08:53:41 berechnet wird und mittels der Distanz die Arbeitsbreite des Pflugs bestimmt und/oder eingestellt wird.

Dadurch, dass das Feld in den wenigstens einen Abschnitt mit zwei geraden Abschnittsgrenzen unterteilt wird und der Zentralpunkt als Schnittpunkt dieser Abschnittsgrenzen ermittelt wird, wird eine besonders einfache geometrische Unterteilung des Feldes in einzelne Abschnitte erzielt. Dadurch, dass der Zentralpunkt ermittelt wird, ist es ohne hohen Rechenaufwand möglich, die Distanz zwischen der Pflugposition und der Abschnittsgrenze entlang des Kreisbogens und den Zentralpunkt zu berechnen und darüber die Arbeitsbreite des Pflugs zu bestimmen und/oder einzustellen.

Dadurch erlaubt das Verfahren auch bei komplizierten Feldgeometrien eine besonders effiziente Bearbeitung des Feldes sowie eine Berechnung der Arbeitsbreite des Pflugs mit geringem Rechenaufwand.

Der Pflug kann an einer landwirtschaftlichen Zugmaschine, insbesondere an einem Traktor, angeordnet sein. Der Pflug kann zur bodenwendenden Bodenbearbeitung ausgebildet sein. Der Pflug kann mehrere Pflugschare umfassen, die zur Einstellung der Arbeitsbreite dreh- und/oder schwenkbar sind. Die Pflugschare können einen Meißel, ein Schar- und/oder ein Streichblech umfassen. Ebenso ist denkbar, dass der Pflug mit tellerförmigen Scheiben ausgebildet ist. Weiterhin kann der Pflug gemäß jeder bereits bekannten Pflugform ausgebildet sein, bei der die Arbeitsbreite einstellbar ist.

Das Ortungssystem kann als Satellitenortungssystem ausgebildet sein, insbesondere als GPS-System. Das Ortungssystem kann eine Antenne umfassen, mit dem ein Satellitensignal empfangen wird. Das Ortungssystem und/oder die Antenne können an der landwirtschaftlichen Zugmaschine oder an dem Pflug selbst angeordnet sein. Bei einer Anordnung des Ortungssystems an der landwirtschaftlichen Zugmaschine kann über den Abstand zwischen dem Pflug und dem Ortungssystem die Pflugposition berechnet werden. Denkbar ist auch jedes andere Ortungssystem, dass eine Ortung der landwirtschaftlichen Zugmaschine und/oder des Pflugs auf dem Feld erlaubt.

Das Feld kann polygonförmig sein. Das Feld kann mittels eines Triangulationsverfahrens in dreieckige und/oder vieleckige Abschnitte unterteilt werden. Wenigstens einer der Abschnitte kann trapezförmig sein. Die zwei geraden Abschnittsgrenzen können die zueinander schrägen Seiten des Trapezes sein. Die zwei geraden Abschnittsgrenzen können unter einem Winkel zueinander verlaufen. Ebenso ist denkbar, dass die zwei geraden Abschnittsgrenzen parallel zueinander sind und der Zentralpunkt im Unendlichen liegt. "Gedachte Verlängerungen" kann bedeuten, dass die geraden Abschnittsgrenzen über den Abschnitt hinaus in gleicher Richtung verlängert werden, bis sich beide Verlängerungen am Schnittpunkt treffen.

Die Distanz wischen der Pflugposition und der Abschnittsgrenze kann über den Abstand zwischen der Pflugposition und dem Zentralpunkt sowie über den Winkel der Abschnittsgrenze und einer Geraden durch die Pflugposition und den Zentralpunkt berechenbar sein. Ebenso ist denkbar, dass die Distanz entlang des Kreisbogens über eine gerade Strecke zwischen der Pflugposition und der Abschnittsgrenze näherungsweise berechnet wird.

Die Arbeitsbreite des Pflugs kann die Breite sein, auf der mit dem Pflug entlang einer Furche der Boden bearbeitet wird. Die Arbeitsbreite kann zwischen einer maximalen und einer minimalen Arbeitsbreite einstellbar sein.

Über die Distanz zweier korrespondierender Endpunkte der zwei Abschnittsgrenzen können eine maximale und/oder eine minimale Furchenzahl zwischen den beiden Endpunkten bestimmt werden. Zwei Endpunkte können miteinander korrespondieren, wenn sie dieselbe Seite eines Vierecks begrenzen. Die zwei Abschnittsgrenzen können ein Viereck aufspannen, wobei jeweils zwei korrespondierende Endpunkte eine schmale und eine breite Seite bilden. Anders ausgedrückt können die zwei Abschnittsgrenzen zwei gegenüberliegende Seiten eines Vierecks sein. Die maximale Furchenzahl kann dadurch berechnet werden, dass die Länge der schmalen Seite durch die minimale Arbeitsbreite des Pflugs dividiert wird. Die minimale Furchenzahl kann dadurch berechnet werden, dass die Länge der breiten Seite durch die maximale Arbeitsbreite dividiert wird. Die maximale und die minimale Furchenzahl können die Obergrenze- bzw. die Untergrenze von Furchen sein, die in diesem Abschnitt durch die Verstellbarkeit des Pflugs pflügbar sind.

Die Arbeitsbreite des Pflugs kann über die innerhalb der Distanz zwischen der Pflugposition und der Abschnittsgrenze zu pflügende Furchenzahl bestimmt werden. Dadurch kann besonders einfach die Arbeitsbreite ermittelt werden. Beispielsweise kann hierzu diese Distanz durch die zu pflügende Furchenzahl dividiert werden.

Beim Wenden des Pflugs kann die zu pflügende Furchenzahl um 1 vermindert werden. Hierdurch wird nach dem Wenden automatisch die noch zu pflügende Furchenzahl zu der Abschnittsgrenze ermittelt.

Das Feld kann vor der Unterteilung in Abschnitte zur Ermittlung von Feldgrenzen umfahren werden. Dadurch ist es besonders einfach möglich, die Feldgeometrie mittels des Ortungssystems zu erfassen. Zur Ermittlung der Feldgrenzen kann mit dem Ortungssystem in festen Zeitintervallen die Pflugposition erfasst werden. Denkbar ist auch, dass die Feldgrenzen aus einer Datenbank oder einem Kartendienst abgerufen werden.

Das Feld kann in einen Hauptabschnitt mit zwei zueinander parallel verlaufenden Hauptabschnittsgrenzen und wenigstens einen Randabschnitt mit zwei zueinander unter einem Winkel stehenden Randabschnittsgrenzen unterteilt werden. Dadurch kann das Feld in einen besonders großen Bereich unterteilt werden, indem die Pflugfurchen parallel verlaufen.

Bei mehreren Zentralpunkten kann abhängig von der Pflugposition ein priorisierter Zentralpunkt automatisch und/oder manuell ausgewählt werden. Dadurch kann ohne großen Rechenaufwand bestimmt werden, welcher Zentralpunkt zur Berechnung der Arbeitsbreite heranzuziehen ist. Dies kann bedeuten, dass abhängig von der Pflugposition ein bestimmter Abschnitt mit seinem zugehörigen Zentralpunkt priorisiert wird.

Für mehrere Abschnitte kann jeweils eine erste Distanz des Zentralpunkts zur Pflugposition, eine zweite Distanz zu einem naheliegenden Ende einer der Abschnittsgrenzen und eine dritte Distanz zu einem entfernten Ende der gleichen Abschnittsgrenze ermittelt werden und über einen Vergleich der ersten, zweiten und dritten Distanz kann bestimmt werden, ob der Zentralpunkt des Abschnitts der priorisierte Zentralpunkt ist. Dadurch kann mit geringem Rechenaufwand bestimmt werden, welcher der priorisierte Zentralpunkt ist. Wenn die erste Distanz größer als die dritte Distanz ist, kann ein anderer Zentralpunkt priorisiert werden und/oder wenn die erste Distanz kleiner als die zweite Distanz ist, kann ein anderer Zentralpunkt priorisiert werden.

Innerhalb des Abschnitts können alle Furchen des Pflugs oder deren gedachte Verlängerungen derart bestimmt werden, dass sie gerade durch den Zentralpunkt verlaufen. Dadurch wird der Abschnitt besonders gleichmäßig gepflügt.

Bei der Fahrt des Pflugs entlang der Furchen kann die Arbeitsbreite in regelmäßigen Zeitintervallen oder kontinuierlich bestimmt und/oder eingestellt werden. Das regelmäßige Zeitintervall kann in einem Bereich von 0,1 - 10 Sekunden, insbesondere in einem Bereich von 0,2 - 1 Sekunde sein.

Zur Umfahrung eines Hindernisses kann die Berechnung der Arbeitsbreite auf Basis des Hindernisdurchmessers und/oder der Hindernisgeometrie und Ausprägung korrigiert werden. Hierzu können Hindernisse innerhalb der Feldgrenze, bevorzugt durch eine Kennzeichnungsmaske wie beispielweise ein in Größe, Form und Ausprägung variables und/oder veränderbares und der Form des Hindernisses entsprechenden Polygon markiert und/oder deren Position und Größe festgelegt und/oder bestimmt werden. Dadurch ist es möglich, bei einem Hindernis die Arbeitsbreite automatisch zu reduzieren, um möglichst gleichmäßige Furchen um das Hindernis herum zu erhalten.

Zur Umfahrung eines Hindernisses kann eine optimale Lenkposition berechnet werden. Dadurch wird der Benutzer des Pflugs bei der Lenkung der landwirtschaftlichen Zugmaschine unterstützt.

Der Pflug, eine landwirtschaftliche Zugmaschine zum Ziehen des Pflugs, ein Packer und/oder andere landwirtschaftliche Geräte, die mit dem Pflug in Verbindung stehen, können automatisch mit dem Verfahren gesteuert werden. Dadurch wird der Benutzer besonders gut beim Pflügen unterstützt und er kann sich auf die Überwachung der Maschinen konzentrieren. Der Packer kann eine Vielzahl von Reifen und/oder Walzenelementen umfassen, die hinter dem Pflug hergezogen werden um den Boden anzudrücken.

Einem Benutzer kann über eine Anzeige die Arbeitsbreite, ein Lenkwinkel, ein Bediensignal zum Ausheben und/oder Einsetzen des Pflugs, Bediensignale zum Aus- und/oder Einklinken eines Packers, Bediensignale für den Pflug, Bediensignale für eine landwirtschaftliche Zugmaschine zum Ziehen des Pflugs und/oder zur Bedienung anderer landwirtschaftlicher Geräte, die mit dem Pflug in Verbindung stehen, angezeigt werden. Weiterhin können die genannten Funktionen und Geräte, unter Anwendung von TIM (Tractor Implement Management) auch automatisch genutzt und/oder angesteuert bzw. ausgeführt werden. Durch die Anzeige kann der Benutzer besonders einfach bei der Bedienung der Maschinen unterstützt werden.

Weiterhin stellt die Erfindung mit dem Anspruch 15 eine Steuerungseinheit für einen Pflug bereit, mit einer Schnittstelle zur Erfassung einer Pflugposition mittels eines Ortungssystems, dadurch gekennzeichnet, dass die Steuerungseinheit zur Durchführung des Verfahrens nach wenigstens einem der Ansprüche 1 - 14 ausgebildet ist.

Dadurch, dass die Steuerungseinheit zur Durchführung des Verfahrens nach wenigstens einem der Ansprüche 1 - 14 ausgebildet ist, kann die Arbeitsbreite ohne hohen Rechenaufwand bestimmt werden und das Feld kann besonders gleichmäßig bearbeitet werden.

Die Steuerungseinheit kann die zuvor in Bezug auf die Ansprüche 1 - 14 beschriebenen Merkmale, einzeln oder in beliebigen Kombinationen, aufweisen.

Die Steuerungseinheit kann an dem Pflug oder an der landwirtschaftlichen Zugmaschine angeordnet sein. Die Steuerungseinheit kann einen Mikroprozessor umfassen, auf dem das Verfahren nach wenigstens einem der Ansprüche 1 - 14 als Computerprogramm ausgeführt wird. Das Computerprogramm kann Instruktionen gemäß dem Verfahren umfassen.

Weitere Merkmale und Vorteile der Erfindung werden nachfolgend anhand der beispielhaften Figuren erläutert. Dabei zeigt:
- Fig. 1: eine Ausführungsform des Verfahrens zur Einstellung der Arbeitsbreite eines Pflugs als Flussdiagramm;
- Fig. 2: ein weiteres Ausführungsbeispiel des Verfahrens bei der Bearbeitung eines trapezförmigen Feldes in einer Draufsicht;
- Fig. 3: ein weiteres Ausführungsbeispiel des Verfahrens bei der Bearbeitung eines polygonförmigen Feldes in einer Draufsicht;
- Fig. 4: eine Detailansicht der Fig. 3 zur Erläuterung der Zentralpunktpriorisierung; und
- Fig. 5: ein weiteres Ausführungsbeispiel des Verfahrens bei der Umfahrung eines Hindernisses in einer Draufsicht.

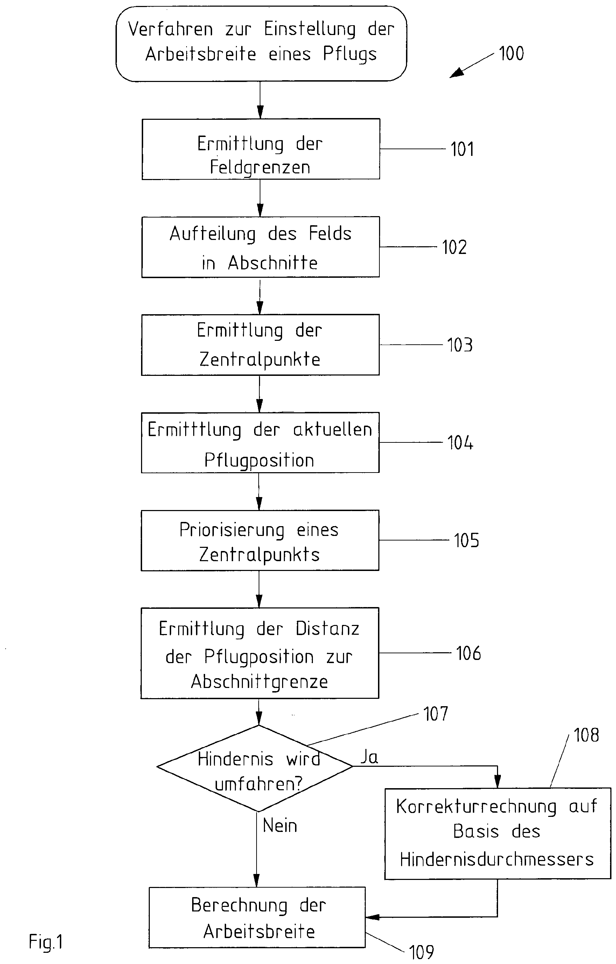

Fig. 1 zeigt ein Ausführungsbeispiel des Verfahrens 100 zur Einstellung der Arbeitsbreite eines Pflugs als Flussdiagramm. Zunächst wird in den ersten drei Schritten 101 - 103 die Geometrie des Feldes erfasst und daraus die Abschnitte und die Zentralpunkte berechnet. Die weiteren Schritte 104 - 109 laufen in festen Zeitintervallen von beispielsweise 0,5 Sekunden während des Pflügens ab, wobei pro Zeitintervall aus der aktuellen Pflugposition die einzustellende Arbeitsbreite des Pflugs berechnet wird.

Zu sehen ist, dass zunächst im Schritt 101 die Feldgrenzen ermittelt werden. Hierzu umfährt der Traktor mit oder ohne Pflug das Feld entlang der Feldgrenzen, wobei fortlaufend von einem Ortungssystem GPS-Positionen ermittelt werden. Dadurch ergeben sich Positionspunkte entlang der Feldgrenzen, die dann zu einem Polygon vervollständigt werden können. Weiterhin werden mehrere Positionspunkte entlang einer Linie zu einer einzelnen Geraden mit zwei Endpunkten vereinfacht. Als Ergebnis erhält man ein geschlossenes Polygon, das die Feldgrenzen repräsentiert. Denkbar ist auch, dass die Feldgrenzen aus einer Datenbank oder von einem Kartendienst abgerufen werden.

Weiterhin können im Schritt 101 zusätzlich Hindernisse innerhalb der Feldgrenze, bevorzugt durch eine Kennzeichnungsmaske mittels beispielweise eines variablen Polygons markiert und/oder deren Position und Größe festgelegt und/oder bestimmt werden. Das Hindernispolygon bildet hierbei exakt und/oder annähern als definierte geometrische Form das Hindernis und folglich dessen geometrische Eigenschaften ab. Hierdurch ergibt sich ein erweitertes Feldpolygon mit kenntlich gemachten Hindernispolygonen variabler und/oder veränderbarer Ausprägung, Form und Größe, welche im Laufe der Fahrt bzw. der Bearbeitung des Feldes berücksichtigt werden können. Zur Umfahrung eines Hindernisses kann die Berechnung der Arbeitsbreite auf Basis des Hindernisdurchmessers und/oder der Hindernisgeometrie und Ausprägung korrigiert werden. Auf diese Weise kann zur Umfahrung eines Hindernisses und zur Unterstützung des Anwenders eine optimale Lenkposition und Schnittbreite ermittelt und/oder angepasst werden.

Im Schritt 102 wird das Feld nun in Abschnitte unterteilt. Falls das Feld eine besonders einfache, viereckige Form aufweist, so genügt lediglich ein Abschnitt. Falls das Feld jedoch eine kompliziertere Feldgrenze hat, so wird es mittels eines Triangulationsalgorithmus in eine Vielzahl von vieleckigen Abschnitten aufgeteilt. Weiterhin ist es möglich, dass der Benutzer an einer Anzeigeeinheit das Feld manuell unterteilt und/oder gemeinsame Grenzen benachbarter Abschnitte manuell verschiebt. Dadurch ist es möglich, dass der Benutzer die Aufteilung des Feldes seinen persönlichen Wünschen oder Erfahrungswerten anpasst.

Für jeden Abschnitt wird nun im Schritt 103 der Zentralpunkt ermittelt. Dazu werden zunächst für jeden Abschnitt zwei gerade Abschnittsgrenzen ermittelt, die einander gegenüberliegen. Darüber hinaus werden die schmale und die breitere Seite zwischen den beiden Abschnittsgrenzen ermittelt. Vorzugsweise werden dabei die zwei geraden Abschnittsgrenzen aller Abschnitte in eine Vorzugsrichtung ausgewählt, damit die Furchen benachbarter Abschnitte möglichst parallel zueinander verlaufen. Anschließend werden nun die Zentralpunkte als Schnitt der beiden geraden Abschnittsgrenzen oder deren gedachten Verlängerungen für jeden Abschnitt ermittelt. Als Ergebnis erhält man für jeden Abschnitt einen Zentralpunkt.

Darüber hinaus werden für jeden Abschnitt die maximale und die minimale Furchenzahl bestimmt. Zur Berechnung der maximalen Furchenzahl wird die zuvor bestimmte schmale Seite durch die minimale Arbeitsbreite des Pflugs dividiert. Weiterhin wird zur Berechnung der minimalen Furchenzahl die Länge der zuvor bestimmten breiten Seite durch die maximale Arbeitsbreite des Pflugs dividiert. Dadurch ist nun bekannt, im welchen Bereich die Furchenzahl in dem Abschnitt gewählt werden kann. Anschließend wird automatisch oder durch manuellen Eingriff des Benutzers die insgesamt zu pflügende Furchenzahl im jeweiligen Abschnitt bestimmt.

Anschließend kann sich der Pflug in Bewegung setzen, wobei die Furche des Pflugs bzw. deren gedachte Verlängerung durch den Zentralpunkt des gewählten Abschnitts verläuft.

Während der Fahrt wird zunächst in einem ersten Schritt 104 die aktuelle Pflugposition mittels eines GPS-Satellitennavigationssystems ermittelt. Da sich die Antenne des GPS-Systems an der Zugmaschine befindet, wird zur Ermittlung der Pflugposition ein Abstandsvektor zu der ermittelten GPS-Position addiert.

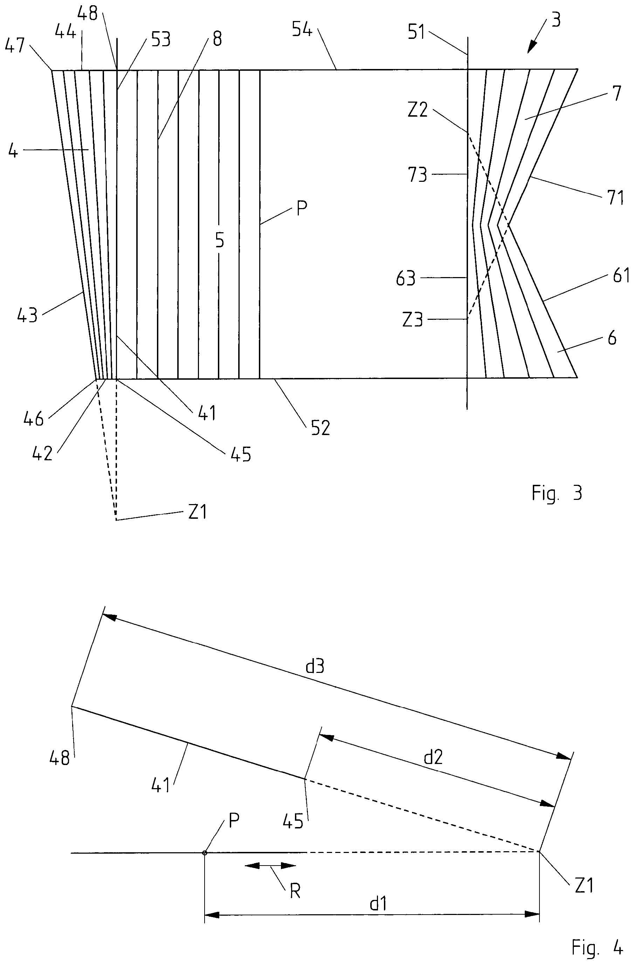

Daraufhin wird im Schritt 105 bei mehreren Abschnitten ein Zentralpunkt priorisiert. Dies erfolgt nach dem Verfahren wie nachfolgend in Bezug auf Fig. 4 genauer beschrieben. Denkbar ist auch, dass derjenige Abschnitt ermittelt wird, in dem sich der Pflug aktuell befindet.

Im Schritt 106 wird die Distanz der Pflugposition zur Abschnittsgrenze berechnet. Hierbei wird diejenige der zwei Abschnittsgrenzen ausgewählt, zu der hin der Pflug das Feld noch nicht bearbeitet hat. In einem ersten Berechnungsschritt wird ein erster Einheitsrichtungsvektor entlang der Abschnittsgrenze berechnet. In einem zweiten Berechnungsschritt wird ein zweiter Einheitsrichtungsvektor durch die Pflugposition und den Zentralpunkt berechnet. Über das Skalarprodukt beider Richtungsvektoren wird in einem dritten Berechnungsschritt der Winkel zwischen beiden Vektoren ermittelt. Als Radius des gesuchten Kreisbogens wird in einem nachfolgenden Berechnungsschritt der Abstand zwischen der Pflugposition und Zentralpunkt berechnet und in einem letzten Berechnungsschritt wird die Distanz zwischen der Pflugposition und der Abschnittsgrenze über den zuvor berechneten Winkel und den Radius des Kreisbogens berechnet.

Falls nun im Schritt 107 kein Hindernis umfahren wird, so wird direkt die Arbeitsbreite im Schritt 109 wie folgt berechnet: Bei der Anfahrt der ersten Furche wird als zu pflügende Furchenzahl die insgesamt zu pflügende Furchenzahl (wie zuvor in Schritt 103 bestimmt) herangezogen. Die Arbeitsbreite ergibt sich durch Division der zuvor ermittelten Distanz zwischen der Pflugposition und der Abschnittsgrenze durch die zu pflügende Furchenzahl. Bei jedem Wendemanöver wird die zu pflügende Furchenzahl um 1 vermindert.

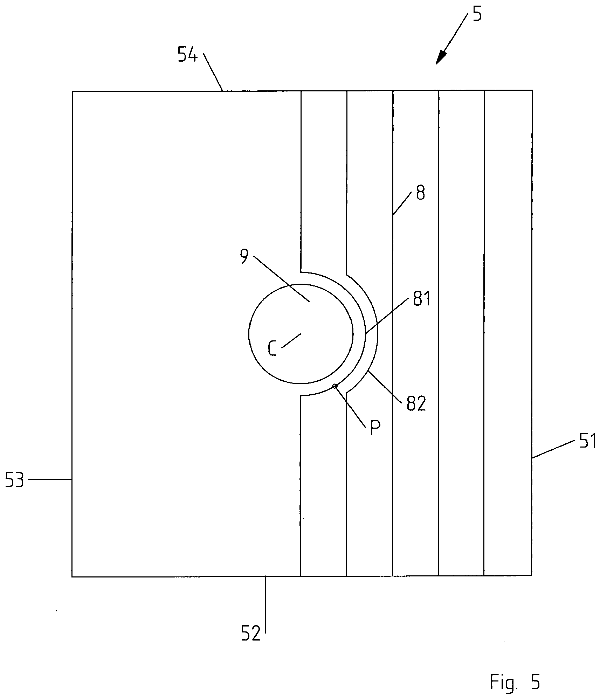

Weiterhin wird im Schritt 108 bei der Umfahrung eines Hindernisses eine Korrekturrechnung auf Basis des Hindernisdurchmessers durchgeführt. Ein Beispiel für eine derartige Korrekturrechnung wird nachfolgend in Bezug auf Fig. 5 genauer beschrieben. Die Schritte 104 - 109 werden bei der Fahrt innerhalb eines Abschnitts fortlaufend in festen Zeitintervallen wiederholt.

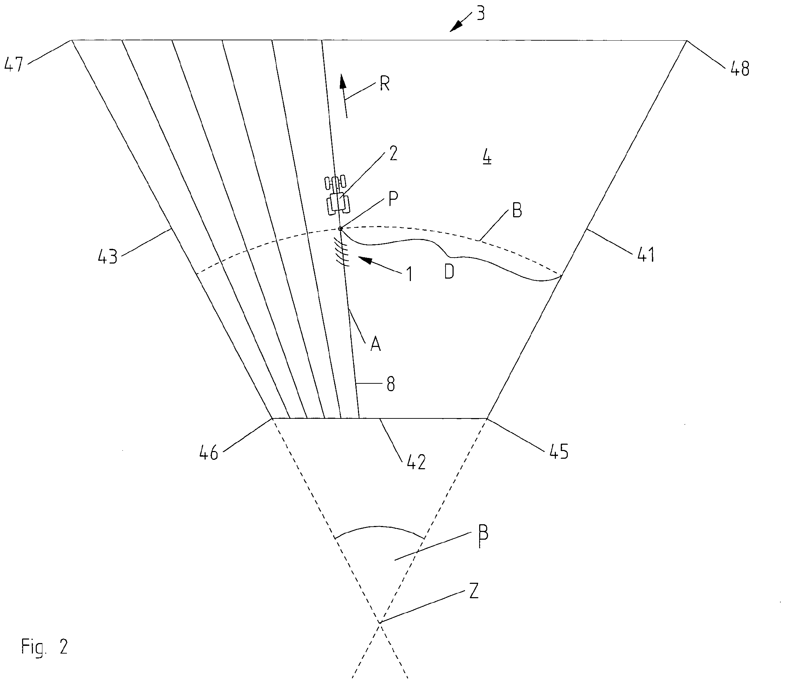

Das in Bezug auf die Fig. 1 beschriebene Verfahren wird im Folgenden für die nachfolgenden Ausführungsbeispiele in den Fig. 2 - 5 angewendet:
In der Fig. 2 ist ein weiteres Ausführungsbeispiel des Verfahrens 100 bei der Bearbeitung eines trapezförmigen Feldes 3 in einer Draufsicht dargestellt. Zu sehen ist, dass der Pflug 1 von dem Traktor 2 entlang der Richtung R auf dem Feld 3 gezogen wird, das lediglich einen einzigen Abschnitt 4 umfasst. Dabei verläuft die Richtung R bzw. die Furchen 8 in ihrer Verlängerung durch den Zentralpunkt Z. Während des Pflügens wird nun laufend die Distanz D entlang des Kreisbogens B um den Zentralpunkt Z zu der Abschnittsgrenze 41 berechnet und dadurch die Arbeitsbreite A fortlaufend bestimmt. Dadurch ist es nicht notwendig, eine aufwändige Routenplanung durchzuführen, da die Berechnung wenig rechenaufwändig ist und fortlaufend während der Bearbeitung des Feldes 3 erfolgen kann.

Das Feld 3 ist hier trapezförmig mit den Ecken 45 - 48 ausgebildet. Dadurch ergeben sich zwei Abschnittsgrenzen 41 und 43, die in der Verlängerung durch den Zentralpunkt Z verlaufen und den Winkel β miteinander einschließen. Weiterhin ist zu sehen, dass das trapezförmige Feld 3 eine schmale Seite 42 und eine breite Seite 44 aufweist, die jeweils die korrespondierenden Endpunkte 45, 46 bzw. 47, 48 verbinden. Diese werden zur Berechnung der minimalen und maximalen Furchenzahl herangezogen.

Weiterhin ist zu sehen, dass sich der Pflug 1 gerade an einer Position P befindet. Diese wurde mit einem satellitengestützten Ortungssystem (GPS-System) bestimmt. Gemäß den Schritten 106 - 109 des zuvor beschriebenen Verfahrens 100 wird die Distanz D entlang des Kreisbogens B um den Zentralpunkt Z berechnet und die Arbeitsbreite A mittels der noch zu pflügenden Furchenzahl (zur Abschnittsgrenze 41 hin) berechnet.

Mit diesem besonders einfachen Verfahren ist es möglich, die Arbeitsbreite A und die Fahrtrichtung R durch den Zentralpunkt Z zu bestimmen und es ist möglich, das Feld 3 ohne großen Aufwand für eine Routenplanung besonders gleichmäßig zu bearbeiten.

In Fig. 3 ist ein weiteres Ausführungsbeispiel zu sehen, bei dem das Feld 3 eine komplexe Polygonform aufweist. Zu sehen ist, dass das Feld 3 die vier Abschnitte 4, 5, 6 und 7 aufweist, die jeweils als Viereck ausgebildet sind. Auf dem Feld 3 befindet sich der Pflug (hier nicht dargestellt) an der Pflugposition P. Um einen besonders großen Bereich parallel pflügen zu können, ist der Hauptabschnitt 5 rechteckig mit zwei zueinander parallel verlaufenden Hauptabschnittsgrenzen 51 und 53 gewählt. Auf einer Anzeigeeinheit ist es möglich, dass der Benutzer die beiden Hauptabschnittsgrenzen 51 und 53 nach Bedarf (in der Fig. 3 nach links und rechts) verschiebt.

Weiterhin ist zu sehen, dass der Abschnitt 4 als Randabschnitt ausgebildet ist und zwei zueinander unter einem Winkel verlaufende Randabschnittsgrenzen 41 und 43 aufweist. Hierbei fällt die Randabschnittsgrenze 41 mit der Hauptabschnittsgrenze 53 zusammen. Darüber hinaus ist zu sehen, dass der Randabschnitt 4 durch die Eckpunkte 45 - 48 als Viereck definiert ist. Die beiden geraden Abschnittsgrenzen 41 und 43 verlaufen in ihrer Verlängerung durch den ersten Zentralpunkt Z₁. Weiterhin sind die schmalen Seiten 42 und die breite Seite 44 zu sehen, über die die insgesamt zu pflügende Furchenzahl in dem Abschnitt 4 berechnet wird. Die Arbeitsbreite und die Furchen im Randabschnitt 4 werden genauso bestimmt, wie zuvor in Bezug auf Fig. 1 und 2 beschrieben.

Weiterhin sind die beiden Randabschnitte 6 und 7 zu sehen, wobei die zugehörigen Zentralpunkte Z₂ und Z₃ innerhalb des Feldes 3 liegen.

Der Zentralpunkt Z₂ des Abschnitts 6 wird durch die Verlängerung der Abschnittsgrenzen 61 und 63 als Schnittpunkt bestimmt. Weiterhin wird der Zentralpunkt Z₃ des Abschnitts 7 als Schnittpunkt der verlängerten Abschnittsgrenzen 71 und 73 bestimmt. Hierbei fallen die Abschnittsgrenzen 63 und 73 jeweils mit der Hauptabschnittsgrenze 51 zusammen.

Bei der Fahrt auf dem Feld 3 wird fortlaufend die Position P des Pflugs durch ein Satellitenortungssystem bestimmt. Die Priorisierung des Zentralpunkts Z₁, Z₂ oder Z₃ erfolgt dabei wie nachfolgend in Bezug auf die Fig. 4 beschrieben:
Für jeden der Abschnitte 4, 6 und 7 wird jeweils die nachfolgend beispielhaft an dem Zentralpunkt Z₁ dargestellte Berechnung durchgeführt. Zunächst wird für den naheliegenden Endpunkt 45 die zweite Distanz d₂ zum Zentralpunkt Z₁ berechnet. Weiterhin wird für den entfernten Endpunkt 48 die dritte Distanz d₃ zum Zentralpunkt Z₁ berechnet.

Nach der Ermittlung der aktuellen Pflugposition P mit dem Ortungssystem wird die erste Distanz d₁ der Pflugposition P zum Zentralpunkt Z₁ berechnet. Anschließend wird die erste Distanz d₁ mit der dritten Distanz d₃ verglichen. Ist die erste Distanz d₁ größer als die dritte Distanz d₃ so wird ein anderer Zentralpunkt gewählt. Ebenfalls wird ein anderer Zentralpunkt gewählt, falls die erste Distanz d₁ kleiner als die zweite Distanz d₂ ist. Diese Berechnung erfolgt auch für die Abschnitte 6 und 7. Falls kein Zentralpunkt mit dieser Berechnung priorisiert werden kann, so befindet sich der Pflug entweder außerhalb des Feldes oder innerhalb des Hauptabschnitts 5 mit einer gleichmäßigen Arbeitsbreite.

Für den priorisierten Zentralpunkt, beispielsweise für Z₁ wird dann die Arbeitsbreitenberechnung entsprechend der Schritte 106 - 109 in Fig. 1 durchgeführt.

In Fig. 5 ist ein weiteres Ausführungsbeispiel des Verfahrens bei der Umfahrung eines Hindernisses 9 in einer Draufsicht dargestellt. Zu sehen ist, dass der Abschnitt 5 rechteckig ist und zwei Abschnittsgrenzen 51, 53 sowie die schmale und die breite Seite 52, 54 aufweist. In diesem speziellen Fall ist die schmale Seite 52 genauso lang wie die breite Seite 54.

Bei der Umfahrung des Hindernisses 9 mit dem Durchmesser C werden die Furchen 81 und 82 um das Hindernis 9 herumgeführt, wobei die Arbeitsbreite des Pflugs an der Position P mit einer Korrekturrechnung angepasst wird.

Bei der Korrekturrechnung wird, wie nachfolgend genauer beschrieben, eine Ausgleichszahl berechnet, die die Anzahl der Furchen darstellt, welche nach der Hindernisumfahrung zum erneuten vollständigen Geradeziehen der Fahrspur benötigt werden. Weiterhin kann mit dieser Ausgleichszahl fortlaufend die Arbeitsbreite bei der Hindernisumfahrt korrigiert werden.

Die Ausgleichszahl wird wie folgt berechnet: Zunächst wird ein minimaler Abstand dadurch berechnet, dass die Länge der schmalsten Seite 52 um den Hindernisdurchmesser C vermindert wird.

Durch die Differenz der Länge der breiten Seite 54 und dem zuvor berechneten minimalen Abstand ergibt sich dann eine Abstandsdifferenz.

Anschließend wird mittels einer Division der Abstandsdifferenz durch den Verstellbereich der Arbeitsbreite des Pflugs die Ausgleichszahl berechnet, welche die Anzahl benötigter Furchen angibt welche bei einer Hindernisumfahrung zum Wiedererreichen einer geraden Furche notwendig ist.

Hierdurch ist es besonders einfach im Bereich des Hindernisses 9 die Arbeitsbreite des Pflugs an der Position P zu berechnen.

Weiterhin umfasst der zuvor in Bezug auf die Ausführungsbeispiele der Figuren 2 - 5 beschriebene Pflug bzw. Traktor eine Steuerungseinheit, die eine Schnittstelle zur Erfassung der Pflugposition P mittels des Ortungssystems aufweist und die zur Durchführung des Verfahrens 100 nach wenigstens einem der Ansprüche 1 - 14 ausgebildet ist.

Es versteht sich, dass in den zuvor beschriebenen Ausführungsbeispielen genannte Merkmale nicht auf diese speziellen Kombinationen beschränkt sind und auch in beliebigen anderen Kombinationen möglich sind.

## Patentansprüche

1. Verfahren (100) zur Einstellung einer Arbeitsbreite (A) eines Pflugs (1), wobei die Pflugposition (P) auf einem Feld (3) mit einem Ortungssystem erfasst wird,
**dadurch gekennzeichnet, dass**
das Feld (3) in wenigstens einen Abschnitt (4) mit zwei geraden Abschnittsgrenzen (41, 43) unterteilt wird,
dass ein Zentralpunkt (Z) als Schnittpunkt der Abschnittsgrenzen (41, 43) oder deren gedachten Verlängerungen ermittelt wird,
dass eine Distanz (D) zwischen der Pflugposition (P) und einer der Abschnittsgrenzen (41) entlang eines Kreisbogens (B) um den Zentralpunkt (Z) berechnet wird, und
mittels der Distanz (D) die Arbeitsbreite (A) des Pflugs (1) bestimmt und/oder eingestellt wird.

2. Verfahren (100) nach Anspruch 1, wobei über die Distanz (D) zweier korrespondierender Endpunkte (47, 48) der zwei Abschnittsgrenzen eine maximale und/oder eine minimale Furchenzahl zwischen den beiden Endpunkten (47, 48) bestimmt werden.

3. Verfahren (100) nach Anspruch 1 oder 2, wobei die Arbeitsbreite (A) des Pflugs (1) über die innerhalb der Distanz (D) zwischen der Pflugposition (P) und der Abschnittsgrenze (41) zu pflügende Furchenzahl bestimmt wird.

4. Verfahren (100) nach Anspruch 3, wobei beim Wenden des Pflugs (1) die zu pflügende Furchenzahl um 1 vermindert wird.

5. Verfahren (100) nach wenigstens einem der Ansprüche 1 - 4, wobei das Feld (3) vor der Unterteilung in Abschnitte (4 - 7) zur Ermittlung von Feldgrenzen umfahren wird.

6. Verfahren (100) nach wenigstens einem der Ansprüche 1 - 5, wobei das Feld (3) in einen Hauptabschnitt (5) mit zwei zueinander parallel verlaufenden Hauptabschnittsgrenzen (51, 53) und wenigstens einen Randabschnitt (4) mit zwei zueinander unter einem Winkel stehenden Randabschnittsgrenzen (41, 43) unterteilt wird.

7. Verfahren (100) nach wenigstens einem der Ansprüche 1 - 6, wobei bei mehreren Zentralpunkten (Z1 - Z3) abhängig von der Pflugposition (P) ein priorisierter Zentralpunkt (Z1) ausgewählt wird.

8. Verfahren (100) nach wenigstens einem der Ansprüche 1 - 7, wobei für mehrere Abschnitte (4, 6, 7) jeweils eine erste Distanz (d1) des Zentralpunkts (Z1 - Z3) zur Pflugposition (P), eine zweite Distanz (d2) zu einem naheliegenden Ende (45) einer der Abschnittsgrenzen (41) und eine dritte Distanz (d3) zu einem entfernten Ende (48) der gleichen Abschnittsgrenze (41) ermittelt wird und wobei über einen Vergleich der ersten, zweiten und dritten Distanz (d1, d2, d3) bestimmt wird, ob der Zentralpunkt (Z1 - Z3) des Abschnitts (4) der priorisierte Zentralpunkt (Z1) ist.

9. Verfahren (100) nach wenigstens einem der Ansprüche 1 - 8, wobei innerhalb des Abschnitts (4, 6, 7) alle Furchen (8) des Pflugs (1) oder deren gedachte Verlängerungen derart bestimmt werden, dass sie gerade durch den Zentralpunkt (Z1 - Z3) verlaufen.

10. Verfahren (100) nach wenigstens einem der Ansprüche 1 - 9, wobei bei der Fahrt des Pflugs (1) entlang einer Furchen (8) die Arbeitsbreite (A) in regelmäßigen Zeitintervallen oder kontinuierlich bestimmt und/oder eingestellt wird.

11. Verfahren (100) nach wenigstens einem der Ansprüche 1 - 10, wobei zur Umfahrung eines Hindernisses (9) die Berechnung der Arbeitsbreite (A) auf Basis des Hindernisdurchmessers (C) korrigiert wird.

12. Verfahren (100) nach wenigstens einem der Ansprüche 1 - 11, wobei zur Umfahrung eines Hindernisses (9) eine optimale Lenkposition berechnet wird.

13. Verfahren (100) nach wenigstens einem der Ansprüche 1 - 12, wobei der Pflug (1), eine landwirtschaftliche Zugmaschine (2) zum Ziehen des Pflugs (1), ein Packer und/oder andere landwirtschaftliche Geräte, die mit dem Pflug (1) in Verbindung stehen, automatisch gesteuert werden.

14. Verfahren (100) nach wenigstens einem der Ansprüche 1 - 13, wobei einem Benutzer über eine Anzeige die Arbeitsbreite (A), ein Lenkwinkel, Bediensignale zum Ausheben und/oder Einsetzen des Pflugs (1), Bediensignale zum Aus- und/oder Einklinken eines Packers, Bediensignale für den Pflug (1), Bediensignale für eine landwirtschaftliche Zugmaschine (2) zum Ziehen des Plugs (1) und/oder zur Bedienung anderer landwirtschaftlicher Geräte, die mit dem Pflug (1) in Verbindung stehen, angezeigt werden.

15. Steuerungseinheit für einen Pflug (1), mit einer Schnittstelle zur Erfassung einer Pflugposition (P) mittels eines Ortungssystems und einem Mikroprozessor zur Ausführung von Computerprogrammen, **dadurch gekennzeichnet, dass** die Steuerungseinheit zur Durchführung des Verfahrens (100) nach wenigstens einem der Ansprüche 1 - 14 ausgebildet ist, wobei der jeweilige Anspruch als Computerprogramm ausgeführt wird.

## Claims

1. Method (100) for adjusting an operating width (A) of a plough (1), wherein the plough position (P) on a field (3) is sensed with a location-determining system,
**characterized in that**
the field (3) is divided into at least one section (4) with two straight section boundaries (41, 43),
**in that** a central point (Z) is determined as a point of intersection of the section boundaries (41, 43) or of their virtual extensions,
**in that** a distance (D) between the plough position (P) and one of the section boundaries (41) is calculated along an arc (B) about the central point (Z), and
the operating width (A) of the plough (1) is determined and/or adjusted by means of the distance (D).

2. Method (100) according to Claim 1, wherein, by means of the distance (D) between two corresponding endpoints (47, 48) of the two boundary limits, a maximum and/or a minimum number of furrows between the two endpoints (47, 48) is determined.

3. Method (100) according to Claim 1 or 2, wherein the operating width (A) of the plough (1) is determined by means of the number of furrows to be ploughed within the distance (D) between the plough position (P) and the section boundary (41).

4. Method (100) according to Claim 3, wherein when the plough (1) turns the number of furrows to be ploughed is reduced by 1.

5. Method (100) according to at least one of Claims 1 to 4, wherein the field (3) is travelled around before the division into sections (4-7) in order to determine the field boundaries.

6. Method (100) according to at least one of Claims 1-5, wherein the field (3) is divided into a main section (5) with two main section boundaries (51, 53) which run parallel to one another and at least one edge section (4) with two edge section boundaries (41, 43) which are at an angle to one another.

7. Method (100) according to at least one of Claims 1-6, wherein when there is a plurality of central points (Z1-Z3), a prioritized central point (Z1) is selected as a function of the plough position (P).

8. Method (100) according to at least one of Claims 1-7, wherein in each case a first distance (d1) of the central point (Z1-Z3) from the plough position (P), a second distance (d2) from a close end (45) of one of the section boundaries (41) and a third distance (d3) from a far end (48) of the same section boundary (41) are determined for a plurality of sections (4, 6, 7), and wherein by comparing the first, second and third distances (d1, d2, d3) it is determined whether the central point (Z1-Z3) of the section (4) is the prioritized central point (Z1).

9. Method (100) according to at least one of Claims 1-8, wherein within the section (4, 6, 7) all the furrows (8) of the plough (1) or their virtual extensions are determined in such a way that they run straight through the central point Z1-Z3).

10. Method (100) according to at least one of Claims 1-9, wherein while the plough (1) is travelling along a furrow (8) the operating width (A) is determined and/or adjusted at regular time intervals or continuously.

11. Method (100) according to at least one of Claims 1-10, wherein in order to travel around an obstacle (9) the calculation of the operating width (A) is corrected on the basis of the obstacle diameter (C).

12. Method (100) according to at least one of Claims 1-11, wherein in order to travel around an obstacle (9) an optimum steering position is calculated.

13. Method (100) according to at least one of Claims 1-12, wherein the plough (1), an agricultural tractor (2) for towing the plough (1), a packer and/or other agricultural devices which are connected to the plough (1) are controlled automatically.

14. Method (100) according to at least one of Claims 1-13, wherein the operating width (A), a steering angle, operator control signals for lifting out and/or depolying the plough (1), operator control signals for disengaging and/or engaging a packer, operator control signals for the plough (1), operator control signals for an agricultural tractor machine (2) for towing the plough (1) and/or for operating other agricultural devices which are connected to the plough (1) are displayed to a user by means of a display.

15. Control unit for a plough (1), having an interface for sensing a plough position (P) by means of a location-determining system and a microprocessor for executing computer programs, **characterized in that** the control unit is designed to carry out the method (100) according to at least one of Claims 1-14, wherein the respective claim is embodied as a computer program.

## Revendications

1. Procédé (100) de réglage d'une largeur de travail (A) d'une charrue (1), la position de la charrue (P) sur un champ (3) étant détectée avec un système de localisation,
**caractérisé en ce que**
le champ (3) est subdivisé en au moins une portion (4) ayant deux limites de portion (41, 43) droites ;
qu'un point central (Z) est déterminé en tant que point d'intersection des limites de portion (41, 43) ou de leurs prolongements imaginaires,
qu'une distance (D) entre la position de la charrue (P) et l'une des limites de portion (41) le long d'un arc de cercle (B) autour du point central (Z) est calculée, et
la largeur de travail (A) de la charrue (1) est déterminée et/ou réglée au moyen de la distance (D).

2. Procédé (100) selon la revendication 1, un nombre maximal et/ou minimal de sillons sont déterminés entre deux points finaux (47, 48) correspondants des deux limites de portion par le biais de la distance (D) entre les deux points finaux (47, 48).

3. Procédé (100) selon la revendication 1 ou 2, la largeur de travail (A) de la charrue (1) étant déterminée par le biais du nombre de sillons à labourer au sein de la distance (D) entre la position de la charrue (P) et la limite de portion (41).

4. Procédé (100) selon la revendication 3, le nombre de sillons à labourer étant diminué de 1 lors du retournement de la charrue (1).

5. Procédé (100) selon au moins l'une des revendications 1 à 4, le champ (3) étant contourné avant la subdivision en portions (4-7) afin de détermine les limites du champ.

6. Procédé (100) selon au moins l'une des revendications 1 à 5, le champ (3) étant subdivisé en une portion principale (5) ayant deux limites de portion principale (51, 53) qui s'étendent parallèlement l'une à l'autre et au moins une portion de bordure (4) ayant deux limites de portion de bordure (41, 43) qui se trouvent à un angle donné l'une par rapport à l'autre.

7. Procédé (100) selon au moins l'une des revendications 1 à 6, un point central prioritaire (Z1) étant sélectionné en fonction de la position de la charrue (P) en présence de plusieurs points centraux (Z1-Z3) .

8. Procédé (100) selon au moins l'une des revendications 1 à 7, une première distance (d1) entre le point central (A1-A3) et la position de la charrue (P), une deuxième distance (d2) jusqu'à une extrémité proche (45) de l'une des limites de portion (41) et une troisième distance (d3) jusqu'à une extrémité distante (48) de la même limite de portion (41) étant respectivement déterminées pour plusieurs portions (4, 6, 7) et une comparaison des première, deuxième et troisième distances (d1, d2, d3) étant effectuée afin de déterminer si le point central (Z1-Z3) de la portion (4) est le point central prioritaire (Z1).

9. Procédé (100) selon au moins l'une des revendications 1 à 8, tous les sillons (8) de la charrue (1) ou leurs prolongements imaginaires étant déterminés au sein de la portion (4, 6, 7) de telle sorte qu'ils passent précisément par le point central (Z1-Z3) .

10. Procédé (100) selon au moins l'une des revendications 1 à 9, la largeur de travail (A) étant déterminée et/ou réglée à intervalles de temps réguliers ou continuellement lors du déplacement de la charrue (1) le long d'un sillon (8).

11. Procédé (100) selon au moins l'une des revendications 1 à 10, le contournement d'un obstacle (9) s'effectuant en corrigeant le calcul de la largeur de travail (A) en fonction du diamètre de l'obstacle (C) .

12. Procédé (100) selon au moins l'une des revendications 1 à 11, une position de direction optimale étant calculée pour le contournement d'un obstacle.

13. Procédé (100) selon au moins l'une des revendications 1 à 12, la charrue (1), un engin tracteur (2) agricole servant à tirer la charrue (1), un tasseur et/ou d'autres engins agricoles qui sont en liaison avec la charrue (1) étant commandés automatiquement.

14. Procédé (100) selon au moins l'une des revendications 1 à 13, la largeur de travail (A), un angle de braquage, des signaux de service pour le levage et/ou l'engagement de la charrue (1), des signaux de service pour l'enclenchement et/ou le désenclenchement d'un tasseur, des signaux de service pour la charrue (1), des signaux de service pour un engin tracteur (2) agricole servant à tirer la charrue (1) et/ou servant à commander d'autres engins agricoles qui sont en liaison avec la charrue (1) étant affichés à l'utilisateur par le biais d'un afficheur.

15. Unité de commande pour une charrue (1), comprenant une interface destinée à détecter une position de la charrue (P) au moyen d'un système de localisation et un microprocesseur destiné à exécuter des programmes informatiques, **caractérisée en ce que** l'unité de commande est configurée pour mettre en oeuvre le procédé (100) selon au moins l'une des revendications 1 à 14, la revendication respective étant réalisée sous la forme d'un programme informatique.
